(19) Europäisches Patentamt
European Patent Office
Office européen des brevets

(11) EP 1 852 463 B1

(12) EUROPEAN PATENT SPECIFICATION

(45) Date of publication and mention of the grant of the patent:
**14.01.2009 Bulletin 2009/03**

(51) Int Cl.:
*C08K 5/098* (2006.01) *C08K 5/13* (2006.01)
*C08L 21/00* (2006.01)

(21) Application number: **07005820.1**

(22) Date of filing: **21.03.2007**

(54) **Rubber composition for coating cord**

Gummizusammensetzung für Beschichtungskord

Composition en caoutchouc pour revêtement de corde

(84) Designated Contracting States:
**DE FR**

(30) Priority: **31.03.2006 JP 2006098037**

(43) Date of publication of application:
**07.11.2007 Bulletin 2007/45**

(73) Proprietor: **SUMITOMO RUBBER INDUSTRIES, LTD.**
**Hyogo-ken (JP)**

(72) Inventor: **Miyazaki, Tatsuya**
**Kobe-shi**
**Hyogo-ken (JP)**

(74) Representative: **Manitz, Finsterwald & Partner GbR**
**Postfach 31 02 20**
**80102 München (DE)**

(56) References cited:
**EP-A- 1 371 618**
**EP-A- 1 568 735**
**WO-A-20/04055106**
**WO-A-20/05098123**
**JP-A- 2 045 584**
**JP-A- 9 012 997**
**JP-A- 49 037 986**
**JP-A- 2000 034 455**
**JP-A- 2003 002 006**
**JP-A- 2004 300 608**
**US-A- 3 963 652**
**US-A- 5 252 405**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 852 463 B1

Printed by Jouve, 75001 PARIS (FR)

## Description

The present invention relates to a rubber composition for coating a cord.

Conventionally, in a rubber composition for coating a fiber cord required to have high rigidity characteristics, a resorcin and/or a modified resorcin resin, and at least one crosslinking agent selected from hexamethylenetetramine (HMT), hexamethoxymethylolmelamine (HMMM) and hexamethylolmelamine pentamethyl ether (HMMPME) have been used. A resorcin and/or a modified resorcin resin (hereinafter referred to as resorcins) improves rigidity (E*) of a rubber composition and functions to cure a rubber layer around a cord periphery. Resorcins also play a role for increasing adhesion force between a rubber and a cord by forming a composite bond layer with a dip layer (resorcin-formalin resin) of a cord.

As described above, resorcins are used for improving rigidity (E*) of a rubber composition and for increasing adhesion force between a rubber and a cord. However, usually resorcins and crosslinking agents are simultaneously mixed together with sulfur and a vulcanization accelerator in a final step, and since a crosslinking agent and a part of resorcins initiate crosslinking, there is a problem that a rubber viscosity is increased and thus processability is deteriorated.

On the other hand, in order to enhance E* of a rubber composition, a method of compounding a phenol resin has been known. Since a phenol resin has poor reactivity, unless a temperature thereof is adjusted to be high, it does not react with a crosslinking agent and is not crosslinked, and therefore, there is no problem such as an increase in viscosity in a kneading step. However, there has been a problem that rolling resistance (tan δ) of a rubber composition is increased.

JP-A-2005-239874 discloses a rubber composition for coating a steel cord of a belt layer, in which peeling between a rubber composition and a steel cord during running of a tire is suppressed by containing specified amounts of a rubber component, sulfur, resorcin or modified resorcin condensate, partial condensate of HMMPME or partial condensate of HMMM, and an organic acid cobalt. However, deterioration of processability accompanying an increase in viscosity in a rubber kneading step, rigidity, and rolling resistance have not been taken into consideration, and there still remains room for improvement.

WO 2004/055106 A2 discloses a rubber composition containing a rubber component selected from natural rubber and/or synthetic rubber, a methylene donor compound generating formaldehyde upon heating and a methylene acceptor compound comprising a phenolic and resorcinolic novolac resin.

WO 2005/098123 A1 discloses a rubber composition comprising a latex of a first rubber, a phenol resin and a water-soluble condensation product of resorcinol-formaldehyde, wherein the first rubber is a nitrile group containing highly saturated polymer rubber having an iodine value of 120 or less.

An object of the present invention is to provide a rubber composition for coating a cord which is excellent in processability, rigidity, rolling resistance characteristics, rubber strength, and durability.

The present invention relates to a rubber composition for coating a cord comprising 0.5 to 10 parts by weight of a modified phenol resin, in which an end portion of the phenol resin is replaced with a branched alkyl group or an aryl group, 0.5 to 5 parts by weight of at least one compound selected from the group consisting of a resorcin, a resorcin condensate, a modified resorcin condensate, a cresol resin and a modified cresol resin and 0.05 to 0.8 parts by weight of an organic acid cobalt converted to cobalt element on the basis of 100 parts by weight of a rubber component, wherein said cord is a steel cord.

The rubber composition for coating a cord of the present invention comprises a rubber component, a modified phenol resin, at least one compound selected from the group consisting of a resorcin, a resorcin condensate, a modified resorcin condensate, a cresol resin, and a modified cresol resin, as well as an organic acid cobalt.

Examples of the rubber component are natural rubber (NR), butadiene rubber (BR), styrene-butadiene rubber (SBR), epoxidized natural rubber (ENR), isoprene rubber (IR), butyl rubber (IIR), acrylonitrile-butadiene rubber (NBR), ethylene-propylene-diene rubber (EPDM), halogenated butyl rubber (X-IIR), and a halogenated product of a copolymer of isomonoolefin and paraalkylstyrene. For the reasons that adhesion to the cord is excellent, and generally, appropriate hardness can be obtained in a sulfur vulcanization system, NR, IR, BR and SBR are preferable.

As for NR, NR of a grade such as RSS#3 and TSR20 conventionally used in the rubber industries can be used. As for IR, IR conventionally used in the rubber industries can be used.

When NR and/or IR is contained, a content of NR in the rubber component is preferably not less than 50 % by weight, more preferably not less than 60 % by weight from the point that a strength at break is increased. The content of NR and/or IR is preferably not more than 90 % by weight, more preferably not more than 80 % by weight from the point that vulcanization reversion is hardly generated.

As for BR, BR generally used in the rubber industries such as BR having a high cis content (high cis BR) can be used.

When BR is contained in the rubber component, a content of BR in the rubber component is preferably not less than 7 % by weight, more preferably not less than 10 % by weight from the point that crack growth resistance is not deteriorated. The content of BR is preferably not more than 30 % by weight, more preferably not more than 25 % by

weight from the point that winding of a kneaded rubber on a roll is not increased.

Examples of SBR are emulsion-polymerized SBR (E-SBR) and solution-polymerized SBR (S-SBR), and SBR is not particularly limited.

When SBR is contained in the rubber component, a content of SBR in the rubber component is preferably not less than 10 % by weight, more preferably not less than 20 % by weight from the point that reversion is not generated. The content of SBR is preferably not more than 40 % by weight, more preferably not more than 30 % by weight from the point that strength at break is not lowered.

Phenol resin is not particularly limited, and examples thereof are phenol resins obtained by reacting phenol with aldehyde such as formaldehyde, acetaldehyde, or furfural by using an acid or an alkali catalyst.

Examples of the phenol resin are, for instance, compounds represented by the following chemical formula 1:

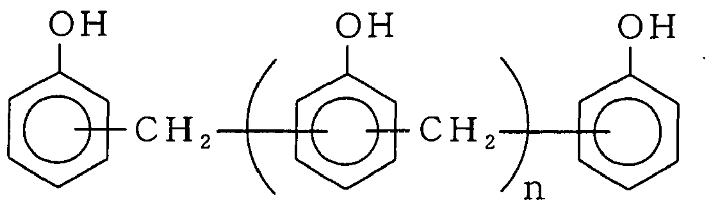

wherein n is an integer, preferably an integer of 1 to 10 from the point that dispersibility in the rubber is satisfactory.

An example of the modified phenol resin is a phenol resin modified with at least one selected from the group consisting of cashew oil, tall oil, linseed oil, various vegetable oils and animal oils, unsaturated fatty acid, rosin, alkylbenzene resin, aniline and melamine.

Herein the modification in the modified phenol resin means replacement of an end portion of a phenol resin with a branched alkyl group or an aryl group.

Among these, cashew oil-modified phenol resin represented by the following chemical formula 2 is preferable as a phenol resin and a modified phenol resin for the reason that a complex modulus (E*) can be improved.

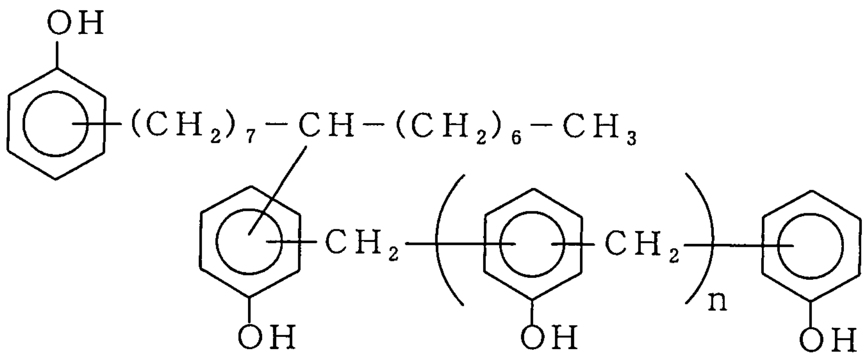

The amount of modified phenol resin is not less than 0.5 part by weight, preferably not less than 1.0 part by weight on the basis of 100 parts by weight of the rubber component from the point that E* is not lowered. The amount of modified phenol resin is not more than 10 parts by weight, preferably not more than 7 parts by weight from the point that E* does not excessively increase, and thus strength at break is not lowered.

The resorcin condensate means a compound represented by the following chemical formula 3.

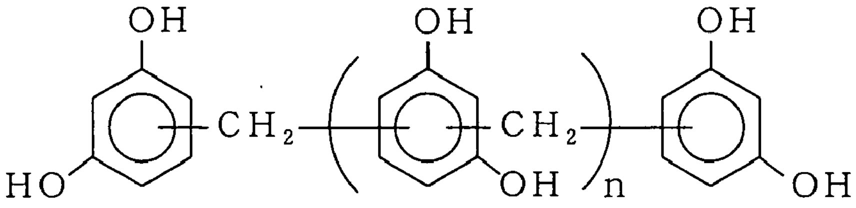

An example of the modified resorcin condensate is a condensate having a resorcin at its end as shown in the following chemical formula 4 and recurring units have a resorcin or alkylphenol.

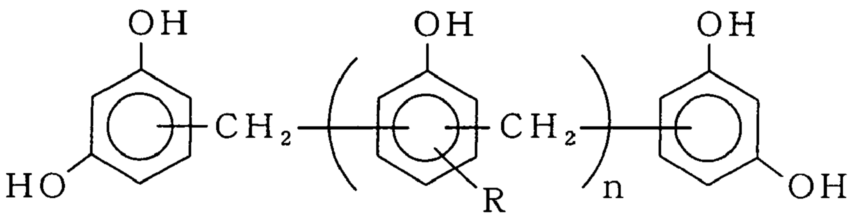

In the chemical formulae 3 and 4, n is an integer, preferably 2 to 5 from the point that dispersibility in the rubber is satisfactory.

In the chemical formula 4, R is an alkyl group, and the number of carbon atoms thereof is preferably not more than 9, more preferably not more than 8. Examples of the alkyl group R of the chemical formula 4 are a methyl group, an ethyl group and an octyl group. In addition, the aforementioned modified resorcin condensate may be a mixture of recurring units having a resorcin or alkylphenol.

Examples of the modified resorcin condensate are, for instance, Sumikanol 620 available from Sumitomo Chemical Co., Ltd., PENACOLITE resin (1319S available from INDSPEC Chemical Corporation) as a resorcin·formalin reactant, and RSM (a mixture containing about 60 % by weight of resorcin and about 40 % by weight of stearic acid). Among these, for the reason that stability for a change with a lapse of time is excellent, Sumikanol 620 is preferable.

The cresol resin means a compound represented by the following chemical formula 5.

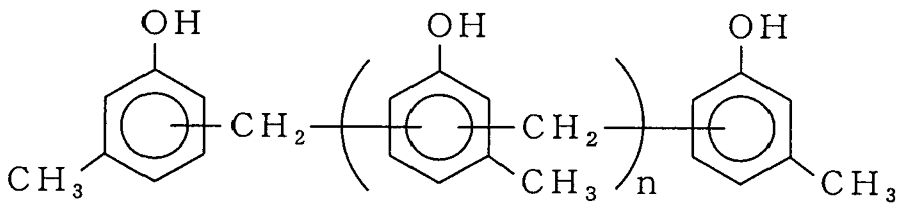

In the formula, n is preferably not less than 1, more preferably not less than 2, and preferably not more than 5.

As for the cresol resin, a methacresol resin is most preferable from the viewpoint that since its softening point is around 100°C (92 to 107°C), a methacresol resin is solid at normal temperature, but is liquid during rubber kneading, thus, being easily dispersed, and further, a temperature of initiating a reaction with a partial condensate of hexamethylolmelamine pentamethyl ether (HMMPME) used in the present invention is as appropriate as around 130°C, which is not more than a processing temperature of a crude rubber (100 to 140°C).

Examples of the modified cresol resin are a cresol resin in which a methyl group at an end thereof is modified with a hydroxyl group and a cresol resin in which a part of its recurring units is alkylated.

In the modified cresol resin, in the case of alkylating a part of recurring units of a cresol resin, the number of carbon atoms of alkyl group of the obtained modified cresol resin is preferably 2 to 5. Examples of the alkyl group are a methyl group, an octyl group and the like.

An amount of at least one compound selected from the group consisting of a resorcin, a resorcin condensate, a modified resorcin condensate, a cresol resin and a modified cresol resin is not less than 0.5 part by weight, preferably not less than 1 part by weight on the basis of 100 parts by weight of the rubber component. When the amount of at least one compound selected from the group consisting of a resorcin, a resorcin condensate, a modified resorcin condensate,

a cresol resin and a modified cresol resin is less than 0.5 part by weight, a crosslinking density of the resin is not sufficient as compared with a crosslinking density of sulfur, and hardness becomes low. The amount of at least one compound selected from the group consisting of a resorcin, a resorcin condensate, a modified resorcin condensate, a cresol resin and a modified cresol resin is not more than 5 parts by weight, preferably not more than 4 parts by weight. When the amount of at least one compound selected from the group consisting of a resorcin, a resorcin condensate, a modified resorcin condensate, a cresol resin and a modified cresol resin is more than 5 parts by weight, since a crosslinking density of the resin is too large as compared with a crosslinking density of sulfur, low heat build-up is deteriorated. A rubber composition prepared by blending the resorcin to the rubber component exhibit nearly the same effect as in a rubber composition prepared by blending a resorcin condensate to a rubber component.

In the present invention, hardness and processability can be improved by containing specified amounts of the above described rubber component, modified phenol resin, and at least one compound selected from the group consisting of a resorcin, a resorcin condensate, a modified resorcin condensate, a cresol resin and a modified cresol resin.

Furthermore the rubber composition of the present invention contains an organic acid cobalt.

Since the organic acid cobalt functions to crosslink the cord and the rubber, adhesion between the cord and the rubber can be improved by compounding the organic acid cobalt.

Examples of the organic acid cobalt are, for instance, cobalt stearate, cobalt naphthenate, cobalt neodecanoate, cobalt borate neodecanoate and the like. From the point that a viscosity is decreased and processability is excellent, cobalt stearate is preferable.

The amount of organic acid cobalt converted to cobalt element is not less than 0.05 part by weight, preferably not less than 0.09 part by weight on the basis of 100 parts by weight of the rubber component. The amount of organic acid cobalt is not more than 0.8 part by weight, preferably not more than 0.3 part by weight, from the point that deterioration of a rubber caused by thermal oxidation is not accelerated, and thus strength at break is not lowered.

The rubber composition for coating a cord of the present invention can contain at least one compound (hereinafter referred to as compound I) selected from the group consisting of hexamethylenetetramine (HMT), hexamethoxymethylolmelamine (HMMM) and HMMPME. Among these, HMT is preferable for the reason that methylene (formaldehyde) is generated during tire vulcanization of the rubber (but not during the processing).

The amount of the compound I is preferably not less than 0.3 part by weight, more preferably not less than 0.5 part by weight on the basis of 100 parts by weight of the rubber component. When the amount of the compound I is less than 0.3 part by weight, generation of methylene is insufficient, and there is a tendency that a crosslinking density of the phenol resin or the resorcin resin is not sufficient. The amount of the compound I is preferably not more than 2.0 parts by weight, more preferably not more than 1.5 parts by weight since ammonia generated along with methylene breaks a dip layer and a plating layer of the cord.

To the rubber composition for coating a cord of the present invention can be optionally compounded, according to the necessity, additives conventionally used in the rubber industries, for example, a reinforcing agent such as carbon black, oil, antioxidant, zinc oxide, stearic acid, sulfur, various vulcanization accelerators, polyvinyl isobutyl ether (PVI) and N-cyclohexylthiophthalimide (CTP) in addition to the above-described rubber component, at least one compound selected from the group consisting of a resorcin, a resorcin condensate, a modified resorcin condensate, a cresol resin and a modified cresol resin, the phenol resin or modified phenol resin, the compound I , and the organic acid cobalt.

The rubber composition of the present invention is used for a carcass and/or a belt among tire parts, and particularly preferably used for a carcass. After coating a cord with the rubber composition and molding a carcass and/or a belt, the carcass and/or belt is laminated with other tire parts to mold an unvulcanized tire, and the unvulcanized tire is vulcanized, thereby a pneumatic tire can be prepared. By using the rubber composition of the present invention for a carcass cord and/or a belt, not for other members, there are advantages that favorable adhesion between the cord and the rubber composition can be obtained, and the rubber composition can be prevented from being broken due to thermal deterioration.

The cord of the present invention means a cord covered with a carcass and/or a belt, using the rubber composition as a carcass and/or a belt. Herein, the cord includes a fiber cord and a steel cord. The fiber cord is obtained from non-metallic materials such as aramid, polyester, nylon, rayon, and polyethylene terephthalate, and the steel cord is obtained from metallic materials. Particularly, the cord of the preset invention is preferably a carcass fiber cord using aramid such as Kevlar among the mentioned materials for the reasons that bending rigidity of a case is complemented, and comprehensive E* (bending rigidity) can be obtained

It is preferable that the carcass and/or the belt cord of the present invention is subjected to dip treatment in order to improve adhesion with the rubber composition. Herein, the dip treatment is to form a resin film of resorcin condensate on the cord surface by immersing the cord into a solution mixture of the resorcin condensate and formaldehyde. Particularly, in the case of a fiber cord, excellent adhesion can be obtained by carrying out the dip treatment.

It is preferable that the tire of the present invention is used as a tire for an autotruck for the reason that the rubber composition of the present invention is suitable for topping of a high-power cord (a low-power cord such as nylon is used in a general tire for an automobile). The tire can be also used as a run-flat tire for an automobile and a tire for a

motorcycle.

EXAMPLES

The present invention is specifically explained by means of Examples, but the present invention is not limited only thereto.

Then, various chemicals used in Examples and Comparative Examples are collectively explained in the following.

Natural rubber (NR): RSS#3
Butadiene rubber (BR) : . BR 150B available from Ube Industries, Ltd.
Styrene butadiene rubber (SBR): SBR1502 (styrene unit content: 23.5 % by weight) available from JSR Corporation
Carbon black: DIABLACK LH (N326) available from Mitsubishi Chemical Corporation
Aromatic oil: Process X-260 available from Japan Energy Corporation
Antioxidant: NOCRAC 6C (N-(1,3-dimethylbutyl)-N'-phenyl-p-phenylenediamine) available from Ouchi Shinko Chemical Industrial Co., Ltd.
Organic acid cobalt: Cobalt stearate (containing 10 % of cobalt element) available from DAINIPPON INK AND CHEMICALS, INCORPORATED.
Zinc oxide: Ginrei R available from Toho Zinc Co., Ltd.
Stearic acid: available from NOF Corporation
Sulfur: Crystex HSOT20 (insoluble sulfur containing 80 % by weight of sulfur and 20 % by weight of an oil content) available from Flexsys Co. Vulcanization accelerator: Nocceler NS (N-tert-butyl-2-benzothiazolylsulfeneamide) available from Ouchi Shinko Chemical Industrial Co., Ltd.
Modified resorcin condensate: Sumikanol 620 (resorcin·alkylphenol condensate which is a mixture of two kinds of the following condensates where R is a methyl group and an octyl group) available from Sumitomo Chemical Co., Ltd.

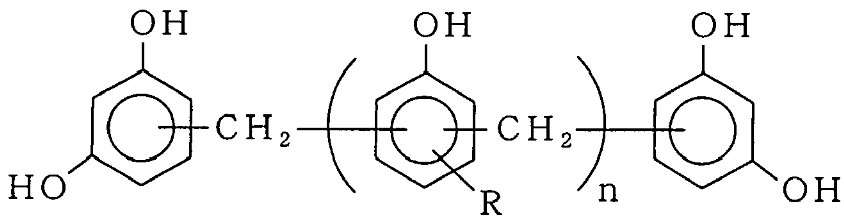

(in the formula, R is a methyl group or an octyl group, and these may be present as a mixture in the condensate)
Modified phenol resin: SUMILITERESIN PR12686R available from Sumitomo Bakelite Co., Ltd.

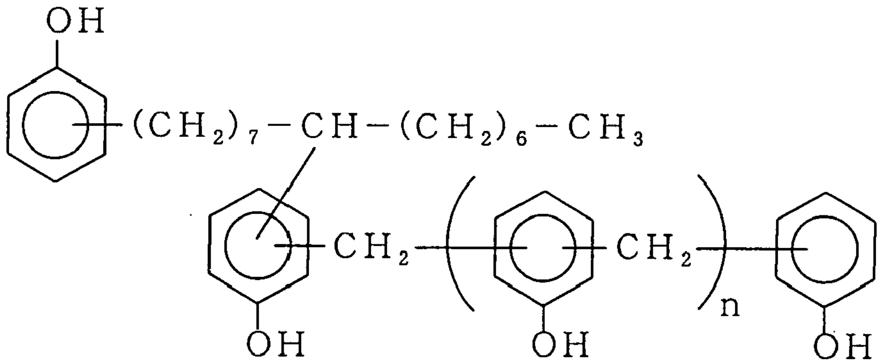

Resorcin condensate:

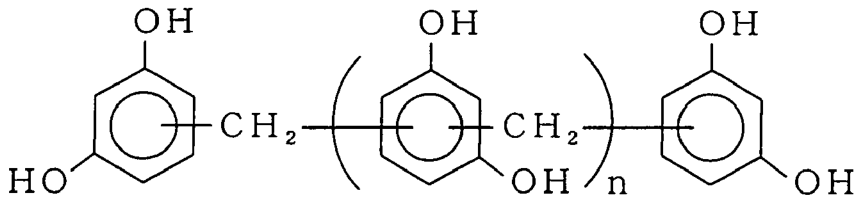

Methacresol condensate:

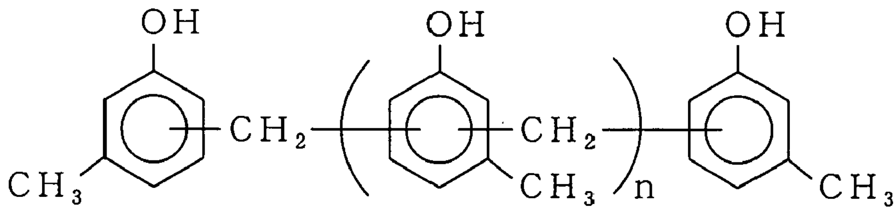

Crosslinking agent: Nocceler H (hexamethylenetetramine) available from Sumitomo Bakelite Co., Ltd.
N-cyclohexylthio-phthalimide (CTP): Retarder CTP available from Toray Industries, Inc.

EXAMPLES not according to the invention 1 and 5 and COMPARATIVE EXAMPLES 1 to 4

According to the compounding formulation shown in Table 1, various chemicals except sulfur, a vulcanization accelerator, HMT and CTP were kneaded in a banbury mixer. Sulfur, vulcanization accelerator, HMT and CTP were added to the obtained kneaded product, and the mixture was kneaded in an open roll to obtain an unvulcanized rubber composition. The unvulcanized rubber composition was vulcanized at 170°C for 12 minutes and thereby a test piece was prepared. The following tests were carried out using the obtained test piece.

<Processability>

A test piece having a specified size was prepared from the above-described unvulcanized rubber composition, and according to JIS K 6300 "Test Method of Unvulcanized Rubbers", by using a Mooney viscosity tester manufactured by Shimadzu Corporation, a small rotor was rotated under the temperature condition of 130°C heated by preheating for 1 minute to measure a Mooney viscosity of the unvulcanized rubber composition after a lapse of 4 minutes. The smaller the Mooney viscosity is, the more excellent processability is.

<Viscoelasticity test>

By using a viscoelasticity spectrometer manufactured by Iwamoto Seisakusyo K.K., under the conditions of an initial strain of 10 %, a dynamic strain of 2 %, and a vibration frequency of 10 Hz, physical properties of a vulcanized rubber sheet at 70°C (complex modulus E* and loss tangent tan δ) were measured. The larger the complex modulus E* is, the higher rigidity is. The smaller tan δ is, the smaller rolling resistance is, which is favorable.

<Tensile test>

According to JIS K 6251 "Rubber, vulcanized or thermoplastic--Determination of tensile stress-strain properties", by using a No.3 dumbbell, a tensile test was carried out, and an elongation at break (%) of each test piece was measured.

(Preparation of a tire)

A fiber cord on which a resin film of resorcin condensate is formed (dip treatment) was coated with the unvulcanized rubber composition to mold an unvulcanized carcass. Then, the prepared unvulcanized carcass was laminated with other tire parts to mold an unvulcanized tire. The unvulcanized tire was vulcanized to prepare a track tire for a

commercial vehicle (tire size: 225/70R16 117/115), and the following test was carried out.

<Heavy load durability drum test>

When a tire was run on a drum at a speed of 20 km/h under the condition of a load of 230 % of a maximum load (maximum internal pressure condition) prescribed by JIS standards, a running distance until swelling at a bead part or a tread part is generated was measured. According to the following calculation formula, each of the measured values of running distances was expressed as an index, assuming a value measured in Example 1 is 100. The larger the value is, the more excellent durability is, which is favorable.

$$(\text{Index of heavy load durability}) = (\text{Running distance of each composition}) \div (\text{Running distance of Example 1}) \times 100$$

Evaluation results of the above tests are shown in Table 1.

TABLE 1

| | Example* | | | | | | | Comparative Example | | | | | |
|---|---|---|---|---|---|---|---|---|---|---|---|---|---|
| | 1 | 2 | 3 | 4 | 5 | 6 | 7 | 1 | 2 | 3 | 4 | 5 | 6 |
| Amounts (parts by weight) | | | | | | | | | | | | | |
| NR | 60 | 60 | 60 | 60 | 60 | 60 | 60 | 60 | 60 | 60 | 60 | 60 | 60 |
| BR | 20 | 20 | 20 | 20 | 20 | 20 | 20 | 20 | 20 | 20 | 20 | 20 | 20 |
| SBR | 20 | 20 | 20 | 20 | 20 | 20 | 20 | 20 | 20 | 20 | 20 | 20 | 20 |
| Carbon black | 48 | 48 | 48 | 48 | 48 | 48 | 48 | 48 | 48 | 48 | 48 | 48 | 48 |
| Aromatic oil | 5 | 5 | 5 | 5 | 5 | 5 | 5 | 5 | 5 | 5 | 5 | 5 | 5 |
| Antioxidant | 2 | 2 | 2 | 2 | 2 | 2 | 2 | 2 | 2 | 2 | 2 | 2 | 2 |
| Organic acid cobalt | - | - | - | - | - | - | - | - | - | - | - | - | - |
| Zinc oxide | 5 | 5 | 5 | 5 | 5 | 5 | 5 | 5 | 5 | 5 | 5 | 5 | 5 |
| Stearic acid | 2.5 | 2.5 | 2.5 | 2.5 | 2.5 | 2.5 | 2.5 | 2.5 | 2.5 | 2.5 | 2.5 | 2.5 | 2.5 |
| Sulfur | 3.75 | 3.75 | 3.75 | 3.75 | 3.75 | 3.75 | 3.75 | 3.75 | 3.75 | 3.75 | 3.75 | 3.75 | 3.75 |
| Vulcanization accelerator | 1.0 | 1.0 | 1.0 | 1.0 | 1.0 | 1.0 | 1.0 | 1.0 | 1.0 | 1.0 | 1.0 | 1.0 | 1.0 |
| Resorcin-modified compound | 2 | 3 | 1 | 4 | 2 | - | - | 4 | 0 | 8 | 0 | - | - |
| Resorcin | - | - | - | - | - | 2 | - | - | - | - | - | 4 | - |
| Methacresol condensate | - | - | - | - | - | - | 2 | - | - | - | - | - | 4 |
| Modified phenol resin | 2 | 1 | 3 | 4 | 2 | 2 | 2 | 0 | 4 | 0 | 8 | 0 | 0 |
| HMT | 1.2 | 1.2 | 1.2 | 1.2 | 1.2 | 1.2 | 1.2 | 1.2 | 1.2 | 2.4 | 2.4 | 1.2 | 1.2 |
| CTP | 0.2 | 0.2 | 0.2 | 0.2 | 0.2 | 0.2 | 0.2 | 0.2 | 0.2 | 0.2 | 0.2 | 0.2 | 0.2 |
| Evaluation results | | | | | | | | | | | | | |
| Mooney viscosity | 52 | 54 | 50 | 56 | 52 | 51 | 49 | 62 | 49 | 85 | 50 | 51 | 48 |
| E* | 10.0 | 9.3 | 12.2 | 14.5 | 11.0 | 11.2 | 11.4 | 7.0 | 11.5 | 12.5 | 18.0 | 8.2 | 8.1 |
| Tan $\delta$ | 0.10 | 0.095 | 0.11 | 0.13 | 0.102 | 0.095 | 0.122 | 0.10 | 0.15 | 0.11 | 0.17 | 0.095 | 0.142 |
| Elongation at break (%) | 300 | 350 | 250 | 240 | 295 | 260 | 330 | 380 | 250 | 340 | 150 | 180 | 370 |

(continued)

| | Example* | | | | | | | Comparative Example | | | | | |
|---|---|---|---|---|---|---|---|---|---|---|---|---|---|
| | 1 | 2 | 3 | 4 | 5 | 6 | 7 | 1 | 2 | 3 | 4 | 5 | 6 |
| Index of heavy load durability | 100 | 90 | 110 | 85 | 105 | 85 | 90 | 55 | 60 | 90 | 50 | 50 | 60 |
| * not according to the invention | | | | | | | | | | | | | |

According to the present invention, there can be provided a rubber composition for coating a cord which is excellent in processability, rigidity, rolling resistance property, rubber strength and durability by containing specified amounts of a rubber component, a modified phenol resin, at least one compound selected from the group consisting of a resorcin, a resorcin condensate, a modified resorcin condensate, a cresol resin and a modified cresol resin as well as an organic acid cobalt.

## Claims

1. A rubber composition for coating a cord, comprising 0.5 to 10 parts by weight of a modified phenol resin, in which an end portion of the phenol resin is replaced with a branched alkyl group or an aryl group, 0.5 to 5 parts by weight of at least one compound selected from the group consisting of a resorcin, a resorcin condensate, a modified resorcin condensate, a cresol resin and a modified cresol resin and 0.05 to 0.8 parts by weight of an organic acid cobalt converted to cobalt element on the basis of 100 parts by weight of a rubber component, wherein said cord is a steel cord.

## Patentansprüche

1. Kautschukzusammensetzung zum Beschichten eines Kords enthaltend 0,5 bis 10 Gewichtsteile eines modifizierten Phenolharzes, wobei ein Endteil des Phenolharzes durch eine verzweigte Alkylgruppe oder eine Arylgruppe ersetzt ist, 0,5 bis 5 Gewichtsteile wenigstens einer Verbindung ausgewählt aus der Gruppe bestehend aus einem Resorcin, einem Resorcinkondensat, einem modifizierten Resorcinkondensat, einem Kresolharz und einem modifizierten Kresolharz sowie 0,05 bis 0,8 Gewichtsteile eines organischen Säurekobalts umgerechnet auf das Kobaltelement auf der Basis von 100 Gewichtsteilen einer Kautschukkomponente, wobei der Kord ein Stahlkord ist.

## Revendications

1. Composition de caoutchouc pour revêtir un câble comprenant 0,5 à 10 parties en masse d'une résine phénolique modifiée, où une partie terminale de la résine phénolique est remplacée par un groupe alkyle ramifié ou un groupe aryle, 0,5 à 5 parties en masse d'au moins un composé choisi dans le groupe consistant en une résorcine, un condensat de résorcine, un condensat de résorcine modifié, une résine de crésol et une résine de crésol modifiée et 0,05 à 0,8 partie en masse d'un composé d'acide organique et de cobalt converti en élément cobalt pour 100 parties en masse d'un composant caoutchouc, où ledit câble est un câble en acier.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005239874 A
- WO 2004055106 A2
- WO 2005098123 A1